# EUROPÄISCHE PATENTSCHRIFT

(11) **EP 3 922 105 B1**
(45) Veröffentlichungstag und Bekanntmachung des Hinweises auf die Patenterteilung: **15.05.2024**
(21) Anmeldenummer: 20179327.0
(22) Anmeldetag: 10.06.2020
(51) Int. Cl.: A23G 3/34, A23G 3/54, A21D 13/28, A21D 13/32, A21D 13/36, A21D 13/38

(54) **FÜLLUNG FÜR EIN NAHRUNGSMITTEL, NAHRUNGSMITTEL MIT DER FÜLLUNG, VERFAHREN ZUR HERSTELLUNG DER FÜLLUNG**
FILLING FOR A FOOD PRODUCT, FOOD PRODUCT WITH THE FILLING, METHOD FOR PREPARING THE FILLING
FOURRAGE POUR UN PRODUIT ALIMENTAIRE, PRODUIT ALIMENTAIRE AVEC LE FOURRAGE, PROCÉDÉ DE PRÉPARATION DU FOURRAGE.

(43) Veröffentlichungstag der Anmeldung: 15.12.2021
(73) Patentinhaber: Griesson - de Beukelaer GmbH & Co. KG, 56751 Polch (DE)
(72) Erfinder: Dyks, Jutta, 56727 Mayen (DE); Hajji, Fuad, 56218 Mülheim-Kärlich (DE); Sidenstein, Tim-Arne, 56727 Mayen (DE); Koch, Christoph, 56073 Koblenz (DE)
(74) Vertreter: Bernsmann, Falk

(56) Entgegenhaltungen:
- EP-A1- 2 452 569
- EP-A1- 2 829 181
- EP-B1- 2 452 569
- DE-A1-102012 015 455
- US-A- 5 968 583

## Beschreibung

### Technisches Gebiet

Die Erfindung betrifft eine Füllung für ein Nahrungsmittel, ein Nahrungsmittel und ein Verfahren zum Herstellen der Füllung für das Nahrungsmittel.

### Stand der Technik

Kekse, Waffeln oder andere teigbasierte Süßwaren werden von vielen Personen vorzugsweise mit einer Schokoladen-, Kakao- oder Nuss-Nugatcreme, beispielsweise als Überzug oder als Füllung, konsumiert. Die Creme bildet einen Bestandteil der Süßware, die einen Kontrast zu dem deutlich trockeneren Gebäck selbst bilden. Die Kombination aus Creme und Gebäck bildet so eine vollendete Einheit, die dem Konsumenten beim Verzehr ein angenehmes Gefühl vermittelt.

Aus dem Stand der Technik sind verschiedene Nahrungsmittel in Form von Keksen, Waffeln, Gebäcken oder anderen teigbasierten Süßwaren und deren Herstellung bekannt. Auch der Einsatz von fettbasierten Füllungen mit hydrophilen Zutaten ist bekannt.

Die US 4,812,318 offenbart beispielsweise das Hinzufügen eines flüssigen Polyols zu einem fließfähigen Schokoladengemisch, um die Viskosität des Gemischs einzustellen. Mit der entsprechend eingestellten Viskosität des Schokoladengemischs wird durch eine zylindrische Düse ein Zylinder aus Teig und Schokoladengemisch gegossen, wobei der Zylinder eine äußere Schokoladenschicht und einen inneren Teigkern hat.

Aus der DE 10 2012 015 455 A1 ist ein Nahrungsmittel in Form einer Dauerbackware bekannt, die ein oberes Backprodukt und ein unteres Backprodukt umfasst, wobei zwischen den Backprodukten eine Zwischenschicht mit einer hydrophilen Lebensmittelzutat ist. Die hydrophile Lebensmittelzutat soll die Formbarkeit der Zwischenschicht einstellen.

Die EP 2 452 569 B1 offenbart ein Nahrungsmittel mit einem geformten Gehäusekörper aus Cerealien, wobei der Gehäusekörper eine Vertiefung aufweist, in die eine wasserfreie Füllung eingelassen ist.

Aus der EP 3 369 321 A1 ist ein gefülltes Süßgebäck bekannt, dass aus zwei Gebäckstücken besteht. Ein unteres Gebäckstück ist als Körper mit einer Vertiefung ausgeformt, ein oberes Gebäckstück ist ein Deckel. In der Vertiefung des unteren Gebäckstücks ist eine Füllung mit einer ersten Materialzusammensetzung eingelassen. Der Deckel sitzt auf der Füllung. Um den Deckel herum, auf der Füllung und an das untere Gebäckstück angrenzend ist ein zweites Füllmaterial vorgesehen, dass die Haltbarkeit des Deckels auf der Füllung verbessern soll. Das zweite Füllmaterial unterscheidet sich von der Hauptfüllung durch einen höheren Schmelzpunkt. Nachteilig ist hierbei, dass das zweite Füllmaterial bei einer Reformulierung der süßen oder herzhaften Hauptfüllung für eine Neuproduktentwicklung rezepturtechnisch angepasst werden muss. Dies gilt insbesondere für die eingesetzten Fette und Öle, um Qualitätsdefizite zu vermeiden.

Die EP 0 906 726 A offenbart die Herstellung eines geschichteten Lebensmittelprodukts mit einer plattenförmigen Füllung aus Schokolade, das ein Füllmaterial zum Fügen aufweist, wodurch ein verzehrfähiges Sandwich-Lebensmittelprodukt entsteht.

Die Patentanmeldung US 5 968 583 A offenbart mesomorphe Phasen von essbaren Tensiden, die vorteilhaft bei der Herstellung von Cremes für Sandwich-Kekse und deren Einarbeitung verwendet werden können, um z. B. Strukturierung oder Fettersatz zu bieten.

Die Patentanmeldung EP 2 829 181 A1 beschreibt ein Verfahren zur Herstellung einer sandwichartig aufgebauten Backware sowie Backware, umfassend zwei im Wesentlichen plattenförmig ausgebildete Gebäckteile sowie eine zwischen den beiden Gebäckteilen angeordnete Füllungsschicht.

### Technische Aufgabe

Die Aufgabe der Erfindung ist es, eine Füllung für ein Nahrungsmittel bereitzustellen, die eine erhöhte Beständigkeit und einfache Herstellung des Nahrungsmittels erlaubt.

### Technische Lösung

Der Gegenstand der vorliegenden Erfindung stellt eine Füllung gemäß Anspruch 1 bereit, welche die technische Aufgabe löst. Ebenso wird die Aufgabe durch ein Nahrungsmittel gemäß Anspruch 7 und ein Verfahren gemäß Anspruch 11 gelöst. Vorteilhafte Ausgestaltungen ergeben sich aus den abhängigen Ansprüchen.

In einem ersten Aspekt betrifft die Erfindung eine Füllung für ein Nahrungsmittel mit einer zähflüssigen, wasserfreien Fettcreme und zumindest einem in die Fettcreme eingebetteten hydrophilen Hilfsmittel. Die Fettcreme umfasst zumindest einen an eine Außenfläche der Fettcreme angrenzenden Außenbereich, zumindest einen Innenbereich und zumindest einen zwischen dem Außenbereich und dem Innenbereich angeordneten Übergangsbereich. Ein Massenanteil C des hydrophilen Hilfsmittels an der Füllung steigt entlang eines Gradienten G von dem Innenbereich über den Übergangsbereich zu dem Außenbereich stetig an.

Das Nahrungsmittel kann vorzugsweise eine teigbasierte Süßware, insbesondere ein Waffelprodukt, ein Keksprodukt oder ein Biskuit-Produkt sein. Das Nahrungsmittel kann mehrere Komponenten umfassen, zumindest eine davon ist die erfindungsgemäße Füllung.

Die Fettcreme ist zähflüssig, hat also eine höhere Viskosität als Wasser, beispielsweise eine Viskosität von 0,1 Pa s bis 150 Pa s, insbesondere von 1 Pa s bis 50 Pa s, gemessen mit einem Rheometer bei 10 Hz und 25 °C.

Die Füllung kann vorzugsweise eine Kakaocreme, eine Schokoladencreme, eine Vollmilchcreme, eine Nugat- und insbesondere eine Nuss-Nugat-Creme oder eine andere fettbasierte Creme oder Paste sein.

Das hydrophile Hilfsmittel bezeichnet einen Stoff, der eine gute Mischbarkeit mit Wasser, jedoch eine schlechte Mischbarkeit mit fettbasierten Stoffen, insbesondere fettbasierten Suspensionen, aufweist.

Erfindungsgemäß nimmt die Füllung einen Bereich in dem Nahrungsmittel ein, der in drei Unterbereiche aufgeteilt werden kann, einen Innenbereich, einen Außenbereich und einen Übergangsbereich. Der Übergangsbereich ist zwischen dem Innenbereich und dem Außenbereich angeordnet, sodass der Innenbereich und der Außenbereich durch den Übergangsbereich voneinander getrennt sind. Im Übergangsbereich nimmt der Massenanteil C des hydrophilen Hilfsmittels in Richtung des Außenbereichs zu und in Richtung des Innenbereichs ab. Der Massenanteil C des hydrophilen Hilfsmittels ist im Außenbereich größer als im Innenbereich. Der Massenanteil C des hydrophilen Hilfsmittels innerhalb des Übergangsbereichs ist nicht konstant.

Der Massenanteil C ist vorzugsweise der Anteil des hydrophilen Hilfsmittels im Verhältnis zum Gesamtgewicht der Füllung.

Die Änderung des Massenanteils C im Übergangsbereich ist stetig und kontinuierlich. Durch die stetige Änderung des Massenanteils C kann ein abrupter Übergang von einem Bereich mit hohem Massenanteil C des hydrophilen Hilfsmittels zu einem Bereich mit einem niedrigen Massenanteil C des hydrophilen Hilfsmittels vermieden werden.

Wenn die Fettcreme mit dem hydrophilen Hilfsmittel in Berührung kommt, steigt die Viskosität der Fettcreme an. Der Außenbereich, der einen höheren Massenanteil C an hydrophilem Hilfsmittel aufweist, hat daher eine höhere Viskosität als der Innenbereich. Der Innenbereich ist vorzugsweise cremig und/oder flüssig bzw. fließfähig oder niedrigviskos, und der Außenbereich ist vorzugsweise fest, starr oder hochviskos bei Umgebungstemperatur.

In vorteilhafter Weise schützt der Außenbereich durch die gegenüber dem Innenbereich erhöhte Viskosität den flüssigeren Innenbereich vor Auslaufen oder dem Eindringen von Fremdstoffen.

Die stetige Änderung des Massenanteils C des hydrophilen Hilfsmittels verbindet in vorteilhafter Weise den Außenbereich und den Innenbereich mechanisch besser als der Übergang zweier Bereiche einer Füllung ohne stetigen Übergangsbereich. Durch die verbesserte mechanische Verbindung kann die Beständigkeit der Füllung, insbesondere eines Nahrungsmittels mit der Füllung, trotz eines Unterschieds der Viskositäten des Außen- und des Innenbereichs innerhalb der Füllung erhöht werden. Dies ist insbesondere vorteilhaft für Temperatur- und/oder Feuchtigkeitsschwankungen der Lagerumgebung des Nahrungsmittels, beispielsweise beim Transport oder Verladen des Nahrungsmittels.

Ein besonderer Vorteil der Erfindung liegt darin, dass sie sich für alle fettbasierten Füllungen eignet, und keine Fugenmasse als Sperrschicht erfordert, die auf der Füllung in einem separaten Folgeprozessschritt aufgebracht werden müsste. Die Füllung ist somit besonders vielseitig und besonders einfach herstellbar. Des Weiteren kann ein unvorteilhafter Einfluss einer Fugenmasse auf die Sensorik der Hauptfüllung beim Verzehr der Backware ausgeschlossen werden.

### Beschreibung der Ausführungsarten

In einer Ausführungsform umfasst die Füllung mehrere Außen- und Innenbereiche, die jeweils über einen Übergangsbereich miteinander verbunden sind. Beispielsweise umfasst die Füllung eine Abfolge Außenbereich-Übergangsbereich-Innenbereich-Übergangsbereich-Außenbereich. Die Füllung kann beliebig viele Bereiche umfassen, wobei zwischen jedem Außenbereich und jedem Innenbereich ein Übergangsbereich angeordnet ist.

In einer Ausführungsform steigt der Massenanteil C des hydrophilen Hilfsmittels von dem Innenbereich über den Übergangsbereich zu dem Außenbereich monoton an.

Das monotone Ansteigen des Massenanteils C des hydrophilen Hilfsmittels von innen nach außen kann bei der Herstellung der Füllung durch eine kontinuierliche Hinzugabe des hydrophilen Hilfsmittels realisiert sein. In vorteilhafter Weise wird dadurch die Herstellung der Füllung vereinfacht.

In einer Ausführungsform bildet zumindest die Außenfläche einen, vorzugsweise festen, Teilbereich einer Seitenfläche der Füllung. Der Teilbereich der Seitenfläche kann beispielsweise als feste Verstärkungsrippe oder Haftrippe, insbesondere für den Kontakt mit einem Grundkörper oder einem Deckelelement des Nahrungsmittels ausgebildet sein. Ferner kann der Teilbereich einen Auslaufschutz eines ansonsten die Füllung teilweise oder vollständig umschließenden Gebäckteils des Nahrungsmittels oder eine Sollbruchkante des Nahrungsmittels bilden.

In einer Ausführungsform bildet die Außenfläche eine gesamte Seitenfläche der Füllung. In dieser Ausführungsform sind die übrigen Flächen der Füllung vorzugsweise von einem Gebäckteil des Nahrungsmittels bedeckt.

In einer Ausführungsform bildet die Außenfläche die gesamte Oberfläche der Füllung, wodurch ein Nahrungsmittel gebildet wird, das nur aus der Füllung besteht. Das Nahrungsmittel hat eine äußere feste Schale und einen cremigen inneren Kern. Die feste Schale schützt den Kern vor dem Eindringen von Fremdkörpern und/oder Fremdstoffen und vor dem Auslaufen. Ferner verleiht die feste Schale dem Nahrungsmittel eine feste, greifbare Struktur, wodurch das Risiko einer Deformation des Produktes beim Transport in der Verpackung als Schüttgut und/oder in der Hand vor dem Verzehr sinkt.

Erfindungsgemäß umfasst das hydrophile Hilfsmittel eine wässrige Lösung oder Suspension, oder das hydrophile Hilfsmittel ist ein einwertiger oder ein mehrwertiger Alkohol und/oder ein Zuckeralkohol. Bevorzugt ist das hydrophile Hilfsmittel Wasser. Wenn das hydrophile Hilfsmittel eine wässrige Lösung oder Suspension umfasst, beträgt der Minimalanteil Cₘᵢₙ des hydrophilen Hilfsmittels an der Füllung zwischen 0,01 und 1,5 Gew.-%, bevorzugt zwischen 0,01 und 1,0 Gew.-%, besonders bevorzugt zwischen 0,01 und 0,5 Gew.-%, und der Maximalanteil Cₘₐₓ des hydrophilen Hilfsmittels an der Füllung beträgt zwischen 0,6 und 2,5 Gew.-%, bevorzugt zwischen 0,6 und 2,0 Gew.-%, besonders bevorzugt zwischen 0,6 und 1,5 Gew.-%.

Wenn das hydrophile Hilfsmittel ein einwertiger oder ein mehrwertiger Alkohol und/oder ein Zuckeralkohol ist, beträgt der Minimalanteil Cₘᵢₙ des hydrophilen Hilfsmittels an der Füllung zwischen 0,01 und 1,5 Gew.-%, bevorzugt zwischen 0,01 und 1,0 Gew.-%, besonders bevorzugt zwischen 0,01 und 0,5 Gew.-%, und der Maximalanteil Cₘₐₓ des hydrophilen Hilfsmittels an der Füllung beträgt zwischen 0,6 und 3,00 Gew.-%, bevorzugt zwischen 0,6 und 2,0 Gew.-%, besonders bevorzugt zwischen 0,6 und 1,0 Gew.-%.

In einer Ausführungsform umfasst der Zuckeralkohol einen Aromastoff.

In vorteilhafter Weise kann durch den Aromastoff der Geschmack des Nahrungsmittels beeinflusst werden.

In einer Ausführungsform enthält die Fettcreme einen Fett-Massenanteil von 20 bis 80 Gew.-%, bevorzugt von 30 bis 60 Gew.-% und besonders bevorzugt von 40 bis 50 Gew.-%.

In einem weiteren Aspekt betrifft die Erfindung ein Nahrungsmittel mit einem festen Grundkörper und zumindest einer Füllung, wobei die Füllung insbesondere eine Kernfüllung, beispielsweise Karamell oder Marmelade, enthalten kann. Die zumindest eine Füllung ist auf dem Grundkörper, bevorzugt in einer Vertiefung des Grundkörpers, angeordnet. Die zumindest eine Füllung ist eine Füllung, wie sie voranstehend beschrieben wurde, und umfasst zumindest eine Außenfläche. Die zumindest eine Außenfläche der zumindest einen Füllung ist dem Grundkörper abgewandt.

In vorteilhafter Weise schützt der hochviskose Außenbereich, welcher an die Außenfläche der Füllung angrenzt, den cremigen und/oder flüssigen Innenbereich der Füllung vor einem Auslaufen und/oder dem Eindringen von Fremdstoffen.

In einer weiteren Ausführungsform umfasst das Nahrungsmittel ein Deckelelement, welches eine dem Grundkörper abgewandte Seite der Füllung zumindest teilweise bedeckt. Zumindest eine Außenfläche der Füllung grenzt an das Deckelelement.

Das Deckelelement bewirkt in vorteilhafter Weise, dass ein Konsument das Nahrungsmittel greifen kann, ohne dass die Körperwärme des Konsumenten die Füllung, insbesondere den festen Außenbereich der Füllung schmilzt und sich der Konsument die Finger schmutzig macht. Der Konsument kann das Nahrungsmittel konsumieren und dabei saubere Finger bewahren.

Durch das Angrenzen der Außenfläche der Füllung an das Deckelelement ist das Deckelelement an dem festen oder hochviskosen Außenbereich der Füllung angebracht, wodurch der Halt des Deckelelements an dem Nahrungsmittel verbessert wird. Hierdurch ist das Nahrungsmittel mechanisch belastbar und insbesondere schüttfähig, ohne dabei beschädigt zu werden.

Der Grundkörper und/oder das Deckelelement können beispielsweise eine Dauerbackware, bevorzugt ein Plätzchen, ein Tartelette, einen Keks, eine Waffel, ein Salzgebäck, insbesondere einen Cracker, und/oder einen Schokoladenkörper umfassen.

In einer Ausführungsform grenzt der zumindest eine Innenbereich der Füllung an den Grundkörper an.

Der Grundkörper kann vorzugsweise wannenartig oder beckenartig ausgeformt sein, wobei eine Bodenfläche von einem Rand umschlossen ist. Der Rand umschließt ferner einen Bereich, welcher zusammen mit der Bodenfläche die Vertiefung in dem Grundkörper bildet. Der Innenbereich der Füllung wird nach oben über den Übergangsbereich durch den Außenbereich, zur Seite durch den Rand des Grundkörpers und nach unten durch die Bodenfläche des Grundkörpers umschlossen.

Durch die cremige und/oder flüssige Füllung in Kombination mit dem Grundkörper und dem Deckelelement werden insbesondere die Bekömmlichkeit sowie der Genusswert des Nahrungsmittels erhöht.

In einer weiteren Ausführungsform bildet das Deckelelement einen Überstand über den Grundkörper. Insbesondere kann auch die Füllung einen Überstand über den Grundkörper bilden. Das Deckelelement, insbesondere der Überstand, kann als ein dekoratives Element des Nahrungsmittels eingesetzt werden.

In vorteilhafter Weise hält das Deckelelement aufgrund der erhöhten Festigkeit der Füllung im Außenbereich besser an der Füllung, auch wenn das Deckelelement über den Grundkörper übersteht.

In einer weiteren Ausführungsform ist das Deckelelement von einem Rand der Vertiefung mit einem Randabstand beabstandet. Der Randabstand kann zwischen 1 und 20%, bevorzugt zwischen 2 und 10% und besonders bevorzugt zwischen 3 und 6% des Durchmessers der Vertiefung betragen. Durch den Randabstand wird die mechanische Stabilität des Nahrungsmittels verglichen mit einem Nahrungsmittel, bei dem das Deckelelement bis zum Rand der Vertiefung reicht, verringert. Es hat sich jedoch überraschenderweise herausgestellt, dass das Deckelelement an einer erfindungsgemäßen Füllung aufgrund des verfestigten Außenbereichs der Füllung trotz eines Randabstands ausreichend stabil befestig werden kann, um ein gegenüber üblichen mechanischen Belastungen beständiges Nahrungsmittel zu erhalten.

In vorteilhafter Weise kann der Konsument des Nahrungsmittels durch die Beabstandung des Deckelelements vom Rand der Vertiefung die Füllung sehen und sich auf das cremige Mundgefühl der Füllung freuen. Dadurch wird der Appetit des Konsumenten auf das Nahrungsmittel angeregt. Ferner kann der Konsument vor dem Konsumieren wahrnehmen, ob er das richtige Nahrungsmittel, insbesondere das Nahrungsmittel mit der gewünschten Füllung, gegriffen hat und so einen ungewollten Geschmack, ausgelöst durch eine Füllung, die der Konsument nicht wollte, verhindern.

In einem weiteren Aspekt betrifft die Erfindung ein Verfahren zum Herstellen einer Füllung, wie sie voranstehend beschrieben wurde. Das Verfahren umfasst die Schritte:
a) Bereitstellen der Fettcreme und der hydrophilen Lebensmittelzutat für die Füllung in voneinander getrennten Vorratsbehältern,
b) gleichzeitiges Applizieren eines, bevorzugt turbulenten, Fettcremestroms der Fettcreme und Applizieren eines, bevorzugt turbulenten, Hilfsmittelstroms des hydrophilen Hilfsmittels durch zumindest zwei voneinander getrennte Kanäle auf eine Oberfläche,
c) wobei der Fettcremestrom außerhalb der Kanäle zumindest teilweise mit dem Hilfsmittelstrom durchmischt wird.

Das Applizieren des Fettcremestroms kann insbesondere vor dem Applizieren des Hilfsmittelstroms erfolgen, um den Innenbereich ohne das hydrophile Hilfsmittel zu bilden. Ferner kann der Hilfsmittelstrom nach dem Fettcremestrom enden, um einen abgeschlossenen Außenbereich zu bilden.

Turbulenzen in dem Hilfsmittelstrom sorgen vorteilhafterweise für eine gute Durchmischung der Fettcreme mit dem hydrophilen Hilfsmittel, wodurch eine gleichmäßige und vorzugsweise homogenere Füllung gebildet wird. Homogen bedeutet in diesem Zusammenhang, dass die Füllung innerhalb einer Schicht senkrecht zum Gradienten G eine homogene Zusammensetzung aufweist. Besteht das Nahrungsmittel nur aus einer Füllung, ist diese Schicht beispielsweise eine Kugelschale des Nahrungsmittels. Ist das Nahrungsmittel ein flaches Gebäck, ist die Schicht beispielsweise eine Ebene parallel zum Grundkörper.

Während des im Wesentlichen gleichzeitigen Applizierens des Fettcremestroms und des Hilfsmittelstroms wird in vorteilhafterweise der Übergangsbereich und anschließend der Außenbereich gebildet.

In vorteilhafter Weise werden die Fettcreme und der Hilfsmittelstrom außerhalb der Kanäle vermischt. Bei einer Vermischung der Fettcreme mit dem hydrophilen Hilfsmittel, wird die Fettcreme viskoser, wodurch sich die Festigkeit erhöht. Das Vermischen außerhalb der Kanäle beugt einem Verstopfen der Kanäle durch eine feste Füllung vor.

In einer Ausführungsform sind die Kanäle als Kanäle einer Mehrkanaldüse ausgestaltet, die zumindest einen Innenkanal und einen, bevorzugt konzentrisch um den Innenkanal angeordneten, Außenkanal umfasst. Die Fettcreme wird durch den Innenkanal und das hydrophile Hilfsmittel durch den Außenkanal appliziert.

In vorteilhafter Weise wird das im Wesentlichen gleichzeitige Applizieren der Fettcreme und des hydrophilen Hilfsmittels durch die Verwendung einer Mehrkanaldüse vereinfacht. Das Applizieren durch eine Mehrkanaldüse kann durch ein One-Shot-Verfahren oder Tripel-Shot-Verfahren erfolgen.

In vorteilhafter Weise wird durch den um den Fettmittelstrom applizierten Hilfsmittelstrom eine Füllung erzeugt, die innen cremig und außen fest ist.

Vorzugsweise wird die Fettcreme zusätzlich durch einen bevorzugt konzentrisch zwischen dem Innenkanal und dem Außenkanal angeordneten Zwischenkanal der Mehrkanaldüse appliziert.

Durch die zusätzliche Fettcreme, die durch den Zwischenkanal appliziert wird, bleibt die Fettcreme aus dem Innenkanal von dem hydrophilen Hilfsmittel separiert. Dies stellt sicher, dass der Innenbereich der Füllung frei von dem hydrophilen Hilfsmittel und damit cremig und/oder flüssig bleibt.

In einem weiteren Aspekt betrifft die Erfindung ein Verfahren zum Herstellen eines voran beschriebenen Nahrungsmittels. Das Verfahren umfass die Schritte:
a) Vorbereiten des Grundkörpers des Nahrungsmittels,
b) Herstellen der Füllung auf dem Grundkörper, bevorzugt in einer Vertiefung des Grundkörpers, mit einem Verfahren, wie es voranstehend beschrieben wurde. Die zumindest eine Außenfläche der Füllung ist dem Grundkörper abgewandt.

In einer Ausführungsform umfasst das Verfahren ein Vorbereiten eines festen Deckelelements des Nahrungsmittels und ein Aufbringen des Deckelelements auf die Füllung, wobei das Deckelelement eine dem Grundkörper abgewandte Seite der Füllung zumindest teilweise bedeckt, und wobei die zumindest eine Außenfläche der Füllung an zumindest eine Außenfläche des Deckelelements angrenzt.

In einer Ausführungsform umfasst das Verfahren ein An-/Erwärmen einer Kontaktfläche der Füllung zum Kontakt mit dem Deckelelement und/oder einer Kontaktfläche des Deckelelements zum Kontakt mit der Füllung vor dem Aufbringen und/oder während des Aufbringens des Deckelelements auf die Füllung.

Durch das An-/Erwärmen der Kontaktfläche wird die Füllung beim Aufbringen des Deckelelements auf die Füllung angeschmolzen, wodurch die Haftung des Deckelelements mit der Füllung verbessert wird.

Wenn es sich bei dem Deckelelement um eine Backware handelt, wird das Deckelelement vorzugsweise auf die Füllung aufgebracht, bevor das Deckelelement nach dem Backen des Deckelelement vollständig abgekühlt ist. Auf diese Weise kann die vom Backen verbleibende Restwärme des Deckelelements genutzt werden, um die Füllung anzuschmelzen, ohne dass ein separater Verfahrensschritt oder eine spezielle Vorrichtung zum An-/Erwärmen der Kontaktfläche notwendig wäre. Somit wird ein besonders effizientes Verfahren erreicht.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische perspektivische Darstellung einer Ausführungsform eines Nahrungsmittels.
Figur 2 zeigt ein schematisches Profil einer Ausführungsform des Nahrungsmittels.
Figur 3 zeigt ein weiteres schematisches Profil einer weiteren Ausführungsform des Nahrungsmittels.
Figur 4 zeigt ein weiteres schematisches Profil einer weiteren Ausführungsform des Nahrungsmittels.
Figur 5 zeigt ein weiteres schematisches Profil einer weiteren Ausführungsform des Nahrungsmittels.
Figur 6 zeigt eine Mehrkanaldüse aus zwei Perspektiven als Schnitt.

### Fig.1

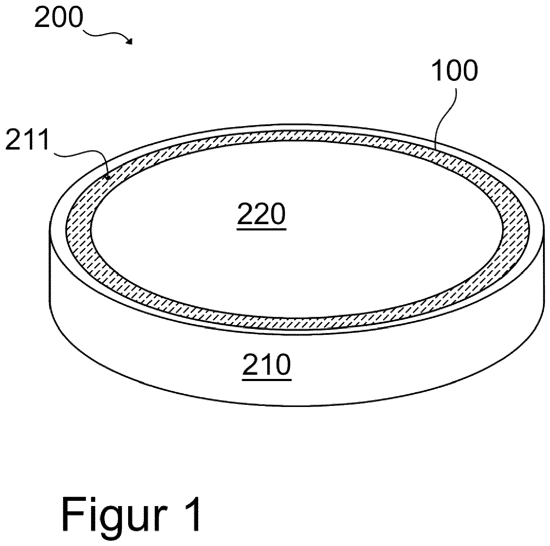

Figur 1 zeigt eine perspektivische und schematische Darstellung eines Nahrungsmittels 200. Das Nahrungsmittel 200 ist als Dauergebäck, insbesondere als Keks dargestellt. Das Nahrungsmittel 200 umfasst einen Grundkörper 210, in welchen eine Vertiefung 211 ausgeformt ist. Die Vertiefung 211 ist mit einer Füllung 100 gefüllt, welche einen Innenbereich (nicht sichtbar) und einen Außenbereich (schraffierter Bereich) umfasst. Auf den Außenbereich ist ein Deckelelement 220 aufgebracht.

### Fig.2

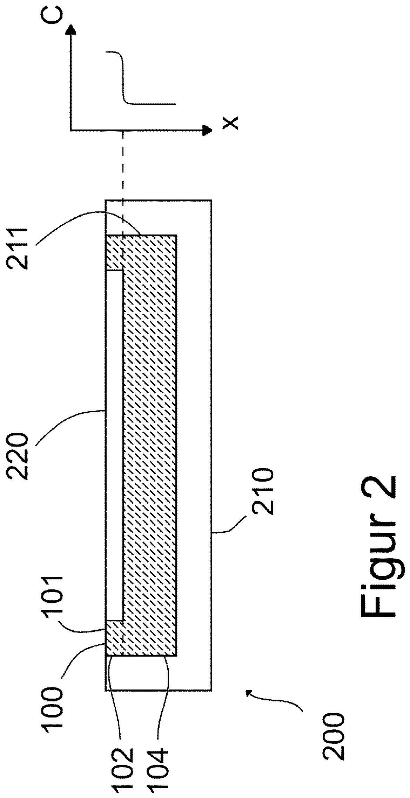

Figur 2 zeigt eine schematische Darstellung des Nahrungsmittels aus Figur 1 von der Seite. Die Füllung 100 ist in einen Innenbereich 104 und einen Außenbereich 102 unterteilt. Zwischen dem Innenbereich 104 und dem Außenbereich 102 ist ein Übergangsbereich gelegen, welcher sich in der dargestellten Ausführungsform um die gestrichelte Linie erstreckt. Neben dem Nahrungsmittel 200 ist der Verlauf des Massenanteiles C des hydrophilen Hilfsmittels zur Fettcreme über die Tiefe der Vertiefung 211 in Richtung x dargestellt.

Im Außenbereich 102 ist der Massenanteil C des hydrophilen Hilfsmittels höher als im Innenbereich 104. Im Übergangsbereich nimmt der Massenanteil C des hydrophilen Hilfsmittels steig ab. Je steiler der Verlauf der Kurve C über x ist, desto dünner ist der Übergangsbereich ausgebildet. Vorzugsweise ist der Massenanteil C des hydrophilen Hilfsmittels im Innenbereich 104 gleich oder nahe 0.

In der dargestellten Ausführungsform ist das Deckelelement 220 in die Füllung 100 eingebettet, sodass das Deckelelement 220 mit der Außenfläche 101 der Füllung 100 und einem Rand des Grundkörpers 210 fluchtet. Der Außenbereich 102 und der Innenbereich 104 sind so dimensioniert, dass der Übergangsbereich im Wesentlichen unter dem Deckelelement 220 verläuft und das Deckelelement 220 von dem Außenbereich 102 der Füllung 100 ringsum umgeben ist. Die flüssige und/oder cremige Füllung 100 des Innenbereichs 104 ist nach unten und zur Seite von dem Grundkörper 210 umgeben. Nach oben wird sie über den Übergangsbereich von dem Außenbereich 102 und dem Deckelelement 220 am Auslaufen gehindert und vor dem Eindringen von Fremdstoffen geschützt.

### Fig.3

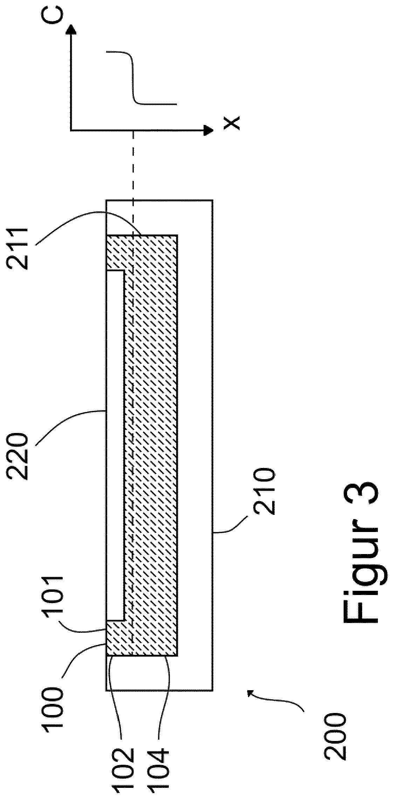

Figur 3 zeigt eine Variation des Nahrungsmittels 200 aus Figur 2. Der Unterschied besteht im Wesentlichen darin, dass der Übergangsbereich in der in Figur 3 dargestellten Ausführungsform (in x-Richtung) tiefer in der Vertiefung 211 gelegen ist als bei der in Figur 2 dargestellten Ausführungsform. Der Verlauf des Massenanteiles C über x und die gestrichelte Linie deuten dies an. Ein Teil des Außenbereichs 102 verläuft unterhalb des Deckelelements 220, was dem Deckelelement 220 mehr Halt an der Füllung 100 verleiht.

### Fig.4

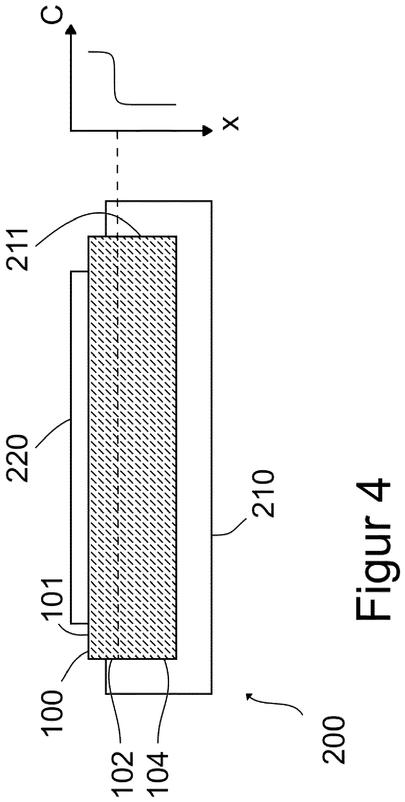

Figur 4 zeigt die schematische Darstellung einer weiteren Variation des Nahrungsmittels 200 aus Figur 3.

In dieser Ausführungsform erstreckt sich der Außenbereich 102 der Füllung 100 aus der Vertiefung 211 des Grundkörpers 210 heraus. Die Füllung 100 weist in dem Außenbereich 102 einen höheren Massenanteil C des hydrophilen Hilfsmittels auf, sodass die Füllung 100 im Außenbereich 102 fest ist und nicht aus dem Grundkörper 210 herausläuft.

Das Deckelelement 220 liegt auf der Außenfläche 101 der Füllung 100 auf und wird durch die Festigkeit der Füllung 100 im Außenbereich an der Füllung gehalten.

### Fig.5

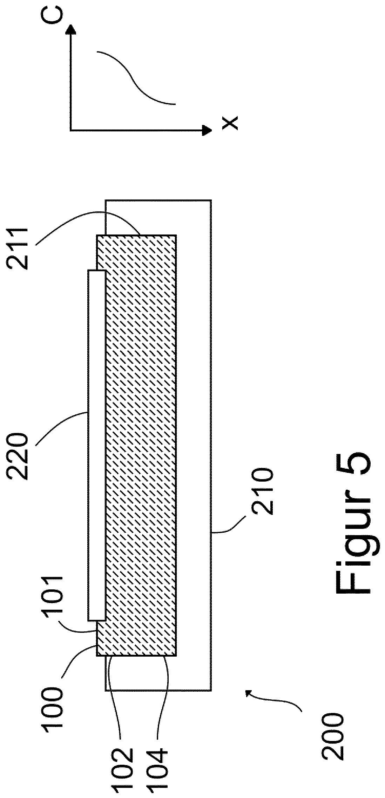

Die in Figur 5 dargestellte Ausführungsform stellt eine Variation der Ausführungsform aus Figur 4 dar. Die Ausführungsform aus Figur 5 unterscheidet sich von der Ausführungsform aus Figur 4 im Wesentlichen durch zwei Dinge.

Der erste Unterschied ist, dass das Deckelelement 220 ähnlich zu der in der Figur 3 dargestellten Ausführungsform in die Füllung 100 eingebettet ist. Jedoch ragt das Deckelelement 220 teilweise aus der Außenfläche 101 der Füllung 100 heraus.

Der zweite Unterschied zur Ausführungsform aus Figur 4 ist der Verlauf des Massenanteils C des hydrophilen Hilfsmittels über die Tiefe x der Vertiefung 211. Der Massenanteil C nimmt mit wachsender Tiefe deutlich langsamer ab als bei der in den Figuren 2 bis 4 dargestellten Ausführungsformen. Durch die langsamere Änderung des Massenanteils C ist der Übergangsbereich breiter. Eine genaue Lokalisierung des Übergangsbereichs ist in der Darstellung der Figur 5 schwierig, weshalb die gestrichelte Linie nicht dargestellt ist.

Die Viskosität der Füllung 100 ändert sich langsamer, was zu einer weiter erhöhten mechanischen Belastbarkeit des Außenbereichs 102 führt, da dieser stärker mit der übrigen Füllung 100 verbunden ist. Im Ergebnis hält das Deckelelement 220 durch die geringere Änderung des Massenanteils C besser an dem Nahrungsmittel 200.

### Fig.6

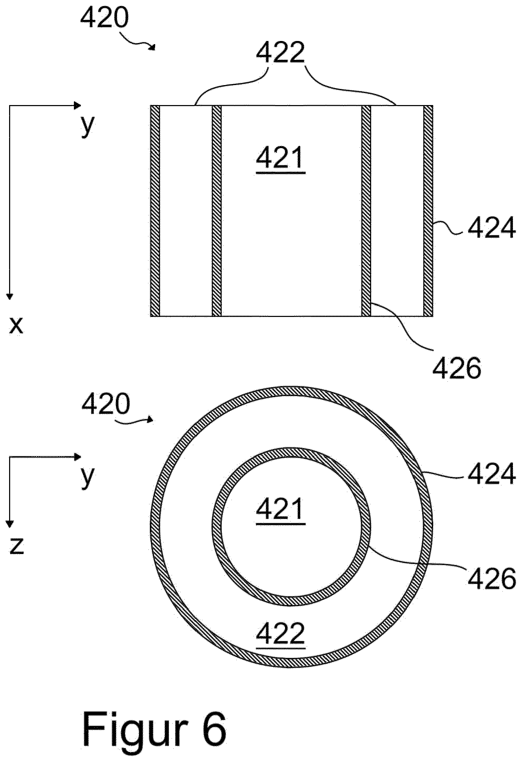

Figur 6 zeigt eine Mehrkanaldüse 420 im Schnitt aus zwei Perspektiven. Der obere Teil der Figur 6 zeigt einen Seitenschnitt (in x-y-Richtung) der Mehrkanaldüse 420. Der untere Teil der Figur 6 zeigt einen horizontalen Schnitt (in y-z-Richtung) der Mehrkanaldüse 420.

Die Mehrkanaldüse 420 umfasst mehrere Kanäle, insbesondere einen Innenkanal 421 und einen Außenkanal 422. Der Innenkanal 421 und der Außenkanal 422 sind durch die innere Kanalwand 426 voneinander getrennt. Der Außenkanal 422 wird radial nach innen durch die innere Kanalwand 426 und nach außen durch die äußere Kanalwand 424 begrenzt.

In der dargestellten Ausführungsform verlaufen der Innenkanal 421 und der Außenkanal 422 parallel zueinander und koaxial angeordnet, sodass die durch die Kanäle austretenden Substanzen die Mehrkanaldüse 420 parallel zueinander verlassen. Alternativ können die innere Kanalwand 426 und insbesondere die äußere Kanalwand 424 konisch zusammenlaufen, um die Durchmischung der durch die Mehrkanaldüse 420 applizierten Substanzen zu verbessern.

Durch den Innenkanal 421 fließt vorzugsweise der Fettcremestrom. Durch den Außenkanal 422 fließt vorzugsweise der Hilfsmittelstrom. Durch die Fließgeschwindigkeit der Ströme kann der Massenanteil C des hydrophilen Hilfsmittels in der Füllung eingestellt werden. Ist bei gleichem Fettcremestrom der Hilfsmittelstrom geringer, so ist der Massenanteil C ebenfalls gering. Ist der Hilfsmittelstrom höher, ist auch der Massenanteil C höher.

Die Radien der Kanäle bestimmen ebenfalls den Fettcreme- und den Hilfsmittelstrom. Je größer die Radien, desto mehr Substanz kann durch den entsprechenden Kanal appliziert werden. Das Verhältnis der Radien bestimmt auch das Verhältnis der Ströme zueinander.

Die Menge der applizierten Fettcreme und des applizierten Hilfsmittels lässt sich somit über den jeweiligen Strom beziehungsweise den Druck in dem jeweiligen Kanal und den Radius des jeweiligen Kanals einstellen.

In weiteren, nicht dargestellten Ausführungsformen kann die Mehrkanaldüse 420 weitere Kanäle umfassen, die vorzugsweise jeweils konzentrisch umeinander angeordnet sind.

### Liste der Bezugszeichen

| | | | |
|---|---|---|---|
| 100 | Füllung | 420 | Mehrkanaldüse |
| 101 | Außenfläche | 421 | Innenkanal |
| 102 | Außenbereich | 422 | Außenkanal |
| 104 | Innenbereich | 424 | äußere Kanalwand |
| 200 | Nahrungsmittel | 426 | innere Kanalwand |
| 210 | Grundkörper | | |
| 211 | Vertiefung | | |
| 220 | Deckelelement | | |

## Patentansprüche

1. Füllung (100) für ein Nahrungsmittel (200)
a) mit einer zähflüssigen, wasserfreien Fettcreme,
b) wobei die Fettcreme eine höhere Viskosität als Wasser hat, und
c) zumindest einem in die Fettcreme eingebetteten hydrophilen Hilfsmittel,
**dadurch gekennzeichnet, dass**
d) die Fettcreme zumindest einen an eine Außenfläche (101) der Fettcreme angrenzenden Außenbereich (102), zumindest einen Innenbereich (104) und zumindest einen zwischen dem Außenbereich (102) und dem Innenbereich (104) angeordneten Übergangsbereich umfasst,
e) wobei ein Massenanteil C des hydrophilen Hilfsmittels an der Füllung (100) entlang eines Gradienten G von dem Innenbereich (104) über den Übergangsbereich zu dem Außenbereich (102) stetig ansteigt,
f) wobei das hydrophile Hilfsmittel eine wässrige Lösung oder Suspension umfasst, wobei ein Minimalanteil Cₘᵢₙ der wässrigen Lösung oder Suspension an der Füllung von 0,01 Gew.-% bis 1,5 Gew.-% und ein Maximalanteil Cₘₐₓ der wässrigen Lösung oder Suspension an der Füllung von 0,6 Gew.-% bis 2,5 Gew.-%, beträgt, oder
g) wobei das hydrophile Hilfsmittel zumindest ein einwertiger oder mehrwertiger Alkohol und/oder ein Zuckeralkohol ist, wobei ein Minimalanteil Cₘᵢₙ des Alkohols und/oder Zuckeralkohols an der Füllung von 0,01 Gew.-% bis 1,5 Gew.-% und ein Maximalanteil Cₘₐₓ des Alkohols und/oder Zuckeralkohols an der Füllung von 0,6 Gew.-% bis 3,0 Gew.-%, beträgt.

2. Füllung (100) nach Anspruch 1,
**dadurch gekennzeichnet, dass**
der Massenanteil C von dem Innenbereich (104) über den Übergangsbereich zu dem Außenbereich (102) monoton ansteigt.

3. Füllung (100) nach Anspruch 1 oder 2,
**dadurch gekennzeichnet, dass**
die Außenfläche (101) zumindest einen Teilbereich einer Seitenfläche der Füllung (100), bevorzugt zumindest eine gesamte Seitenfläche der Füllung (100), besonders bevorzugt eine gesamte Oberfläche der Füllung (100) bildet.

4. Füllung (100) nach einem der Ansprüche 1 bis 3,
a) das hydrophile Hilfsmittel eine wässrige Lösung oder Suspension, bevorzugt Wasser, umfasst, wobei
b) der Minimalanteil Cₘᵢₙ von 0,01 Gew.-% bis 1,0 Gew.-% und der Maximalanteil Cₘₐₓ von 0,6 Gew.-% bis 2,0 Gew.-%, beträgt,
c) wobei bevorzugt der Minimalanteil Cₘᵢₙ von 0,01 Gew.-% bis 0,5 Gew.-% und der Maximalanteil Cₘₐₓ von 0,6 Gew.-% bis 1,5 Gew.-%, beträgt.

5. Füllung (100) nach einem der Ansprüche 1 bis 3,
**dadurch gekennzeichnet, dass**
a) das hydrophile Hilfsmittel zumindest ein einwertiger oder mehrwertiger Alkohol und/oder ein Zuckeralkohol ist, wobei
b) der Minimalanteil Cₘᵢₙ von 0,01 Gew.-% bis 1,0 Gew.-% und der Maximalanteil Cₘₐₓ von 0,6 Gew.-% bis 2,0 Gew.-%, beträgt,
c) wobei bevorzugt der Minimalanteil Cₘᵢₙ von 0,01 Gew.-% bis 0,5 Gew.-% und der Maximalanteil Cₘₐₓ von 0,6 Gew.-% bis 1,0 Gew.-%, beträgt.

6. Füllung (100) nach einem der Ansprüche 1 bis 5,
**dadurch gekennzeichnet, dass**
die Fettcreme einen Fett-Massenanteil von 20 Gew.-% bis 80 Gew.-%, bevorzugt von 30 Gew.-% bis 60 Gew.-%, besonders bevorzugt von 40 Gew.-% bis 50 Gew.-%, enthält.

7. Nahrungsmittel (200) mit
a) einem festen Grundkörper (210) und
b) zumindest einer Füllung (100)
c) wobei die Füllung (100) auf dem Grundkörper (210), bevorzugt in einer Vertiefung (211) des Grundkörpers (210), angeordnet ist,
**dadurch gekennzeichnet, dass**
f) die Füllung (100) nach einem der Ansprüche 1 bis 6 ausgestaltet ist, und
g) die zumindest eine Außenfläche (101) der Füllung (100) dem Grundkörper (210) abgewandt ist.

8. Nahrungsmittel (200) nach Anspruch 7,
**gekennzeichnet durch**
a) zumindest ein festes Deckelelement (220),
b) wobei das Deckelelement (220) eine dem Grundkörper (210) abgewandte Seite der Füllung (100) zumindest teilweise bedeckt, und
c) wobei die zumindest eine Außenfläche (101) der Füllung (100) an das Deckelelement (220) angrenzt.

9. Nahrungsmittel (200) nach Anspruch 8,
**dadurch gekennzeichnet, dass**
a) das Deckelelement (220) von einem Rand der Vertiefung (211) mit einem Randabstand beabstandet ist, wobei der Randabstand bevorzugt 1 % bis 20 %, besonders bevorzugt 2 % bis 10 %, meist bevorzugt 3 % bis 6 %, eines Durchmessers der Vertiefung (211) beträgt und/oder
b) das Deckelelement (220) und bevorzugt auch die Füllung (100) einen Überstand über den Grundkörper (210) bildet.

10. Nahrungsmittel (200) nach einem der Ansprüche 7 bis 9,
**dadurch gekennzeichnet, dass**
der zumindest eine Innenbereich (104) der Füllung (100) an den Grundkörper (210) angrenzt.

11. Verfahren zum Herstellen einer Füllung (100) nach einem der Ansprüche 1 bis 6,
**gekennzeichnet durch folgende Schritte**
a) Bereitstellen der Fettcreme und der hydrophilen Lebensmittelzutat für die Füllung (100) in voneinander getrennten Vorratsbehältern,
b) gleichzeitiges Applizieren eines, bevorzugt turbulenten, Fettcremestroms der Fettcreme und Applizieren eines, bevorzugt turbulenten, Hilfsmittelstroms des hydrophilen Hilfsmittels durch zumindest zwei voneinander getrennte Kanäle auf eine Oberfläche,
c) wobei der Fettcremestrom außerhalb der Kanäle zumindest teilweise mit dem Hilfsmittelstrom durchmischt wird.

12. Verfahren nach Anspruch 11,
**dadurch gekennzeichnet, dass**
a) die Kanäle als Kanäle einer Mehrkanaldüse (420) ausgestaltet sind,
a) wobei die Mehrkanaldüse (420) zumindest einen Innenkanal (421) und einen, bevorzugt konzentrisch um den Innenkanal (421) angeordneten Außenkanal (422) umfasst,
b) wobei die Fettcreme durch den Innenkanal (421) und das hydrophile Hilfsmittel durch den Außenkanal (422) appliziert wird,
c) wobei die Fettcreme bevorzugt zusätzlich durch einen, bevorzugt konzentrisch zwischen dem Innenkanal (421) und dem Außenkanal (422) angeordneten Zwischenkanal der Mehrkanaldüse (420) appliziert wird.

13. Verfahren zum Produzieren eines Nahrungsmittels (200) nach einem der
Ansprüche 7 bis 10
**gekennzeichnet durch folgende Schritte:**
a) Vorbereiten des Grundkörpers (210) des Nahrungsmittels (200),
b) Herstellen der Füllung (100) auf dem Grundkörper (210), bevorzugt in einer Vertiefung (211) des Grundkörpers (210), mit einem Verfahren nach einem der Ansprüche 11 bis 12,
c) wobei die zumindest eine Außenfläche (101) der Füllung (100) dem Grundkörper (210) abgewandt ist.

14. Verfahren nach Anspruch 13
**gekennzeichnet durch den Schritt:**
a) Vorbereiten eines festen Deckelelements (220) des Nahrungsmittels (200),
b) Aufbringen des Deckelelements (220) auf die Füllung (100),
c) wobei das Deckelelement (220) eine dem Grundkörper (210) abgewandte Seite der Füllung (100) zumindest teilweise bedeckt, und
d) wobei die zumindest eine Außenfläche (101) der Füllung (100) an zumindest eine Außenfläche des Deckelelements (220) angrenzt.

15. Verfahren nach Anspruch 14
**gekennzeichnet durch den Schritt:**
An-/Erwärmen einer Kontaktfläche der Füllung (100) zum Kontakt mit dem Deckelelement (220) und/oder einer Kontaktfläche des Deckelelements (220) zum Kontakt mit der Füllung (100) vor dem Aufbringen und/oder während des Aufbringens des Deckelelements (220) auf die Füllung (100).

## Claims

1. A filling (100) for a food product (200)
a) comprising a viscous, water-free fat cream,
b) the fat cream having a higher viscosity than water, and
c) at least one hydrophilic additive embedded in the fat cream, **characterised in that**
d) the fat cream comprises at least one outer region (102) adjacent to an outer surface (101) of the fat cream, at least one inner region (104), and at least one transition region arranged between the outer region (102) and the inner region (104),
e) wherein a mass fraction C of the hydrophilic additive in the filling (100) continuously increases along a gradient G from the inner region (104) via the transition region to the outer region (102),
f) wherein the hydrophilic additive comprises an aqueous solution or suspension, wherein a minimum proportion Cₘᵢₙ of the aqueous solution or suspension on the filling is from 0.01 wt.% to 1.5 wt.% and a maximum proportion Cₘₐₓ of the aqueous solution or suspension on the filling is from 0.6 wt.% to 2.5 wt.%, or
g) wherein the hydrophilic additive is at least a monohydric or polyhydric alcohol and/or a sugar alcohol, wherein a minimum proportion Cₘᵢₙ of the alcohol and/or sugar alcohol in the filling is from 0.01 wt.% to 1.5 wt.% and a maximum proportion Cₘₐₓ of the alcohol and/or sugar alcohol in the filling is from 0.6 wt.% to 3.0 wt.%.

2. The filling (100) according to claim 1,
**characterised in that**
the mass fraction C increases monotonically from the inner region (104) via the transition region to the outer region (102).

3. The filling (100) according to claim 1 or 2,
**characterised in that**
the outer surface (101) forms at least a partial area of a side surface of the filling (100), preferably at least an entire side surface of the filling (100), particularly preferably an entire surface of the filling (100).

4. The filling (100) according to any of claims 1 to 3,
**characterised in that**
a) the hydrophilic additive comprises an aqueous solution or suspension, preferably water,
b) wherein the minimum proportion Cₘᵢₙ is from 0.01 wt.% to 1.0 wt.% and the maximum proportion Cₘₐₓ is from 0.6 wt.% to 2.0 wt.%,
c) preferably the minimum proportion Cₘᵢₙ being from 0.01 wt.% to 0.5 wt.% and the maximum proportion Cₘₐₓ being from 0.6 wt.% to 1.5 wt.%.

5. The filling (100) according to any of claims 1 to 3,
**characterised in that**
a) the hydrophilic additive is at least one monohydric or polyhydric alcohol and/or a sugar alcohol, wherein
b) the minimum proportion Cₘᵢₙ is from 0.01 wt.% to 1.0 wt.% and the maximum proportion Cₘₐₓ is from 0.6 wt.% to 2.0 wt.%,
c) preferably the minimum proportion Cₘᵢₙ being from 0.01 wt.% to 0.5 wt.% and the maximum proportion Cₘₐₓ being from 0.6 wt.% to 1.0 wt.%.

6. The filling (100) according to any of claims 1 to 5,
**characterised in that,**
the fat cream contains a fat mass fraction of from 20 wt.% to 80 wt.%, preferably from 30 wt.% to 60 wt.%, particularly preferably from 40 wt.% to 50 wt.%.

7. A food product (200) with
a) a solid base body (210) and
b) at least one filling (100),
c) wherein the filling (100) is arranged on the base body (210), preferably in a recess (211) of the base body (210)
**characterised in that**
d) the filling (100) is designed according to any of claims 1 to 6, and
e) the at least one outer surface (101) of the filling (100) faces away from the base body (210).

8. The food product (200) according to claim 7, **characterised by,**
a) at least one solid cover element (220),
b) wherein the cover element (220) at least partially covers a side of the filling (100) facing away from the base body (210), and
c) wherein the at least one outer surface (101) of the filling (100) is adjacent to the cover element (220).

9. The food product (200) according to claim 8,
**characterised in that,**
a) the cover element (220) is spaced apart from an edge of the recess (211) by an edge distance, the edge distance preferably being 1 % to 20 %, particularly preferably 2 % to 10 %, most preferably 3 % to 6 %, of a diameter of the recess (211) and/or
b) the cover element (220) and preferably also the filling (100) forms a projection over the base body (210).

10. The food product (200) according to any of claims 7 to 9,
**characterised in that,**
the at least one inner region (104) of the filling (100) is adjacent to the base body (210).

11. A method of preparing a filling (100) according to any of claims 1 to 6
**characterised by the following steps:**
a) providing the fat cream and the hydrophilic additive for the filling (100) in storage containers separated from one another,
b) simultaneously applying a, preferably turbulent, fat cream stream of the fat cream and applying a, preferably turbulent, additive stream of the hydrophilic additive through at least two channels separated from one another onto a surface,
c) wherein the fat cream stream is at least partially mixed with the additive stream outside the channels.

12. The method according to claim 11,
**characterised in that,**
a) the channels are configured as channels of a multi-channel nozzle (420),
b) wherein the multi-channel nozzle (420) comprises at least one inner channel (421) and an outer channel (422), preferably arranged concentrically around the inner channel (421),
c) wherein the fat cream is applied through the inner channel (421) and the hydrophilic additive is applied through the outer channel (422),
d) wherein the fat cream is preferably additionally applied through an intermediate channel of the multi-channel nozzle (420) arranged, preferably concentrically, between the inner channel (421) and the outer channel (422).

13. A method for producing a food product (200) according to any of claims 7 to 10,
**characterised by the following steps:**
a) preparing the base body (210) of the food product (200),
b) preparing the filling (100) on the base body (210), preferably in a recess (211) of the base body (210), using a method according to any of claims 11 to 12,
c) wherein the at least one outer surface (101) of the filling (100) faces away from the base body (210).

14. A method according to claim 13,
**characterised by the steps:**
a) preparing a solid cover element (220) of the food product (200), and
b) applying the cover element (220) to the filling (100),
c) wherein the cover element (220) at least partially covers a side of the filling (100) facing away from the base body (210), and
d) wherein the at least one outer surface (101) of the filling (100) is adjacent to at least one outer surface of the cover element (220).

15. The method according to claim 14 comprising the following step:
**characterised by the step:**
heating a contact surface of the filling (100) for contact with the cover element (220) and/or a contact surface of the cover element (220) for contact with the filling (100) prior to application and/or during application of the cover element (220) to the filling (100).

## Revendications

1. Fourrage (100) pour un produit alimentaire (200)
a) avec une crème grasse visqueuse et anhydre,
b) la crème grasse ayant une viscosité supérieure à celle de l'eau , et
c) au moins un adjuvant hydrophile incorporé dans la crème grasse, **caractérisée en ce que**
d) la crème grasse comprend au moins une zone extérieure (102) adjacente à une surface extérieure (101) de la crème grasse, au moins une zone intérieure (104) et au moins une zone de transition disposée entre la zone extérieure (102) et la zone intérieure (104),
e) une proportion en masse C de l'adjuvant hydrophile dans le fourrage (100) augmentant constamment le long d'un gradient G depuis la zone intérieure (104) jusqu'à la zone extérieure (102) en passant par la zone de transition,
f) l'adjuvant hydrophile comprenant une solution ou une suspension aqueuse, une proportion minimale Cₘᵢₙ de la solution ou de la suspension aqueuse dans le fourrage étant de 0,01 % en poids à 1,5 % en poids et une proportion maximale Cₘₐₓ de la solution ou de la suspension aqueuse dans le fourrage étant de 0,6 % en poids à 2,5 % en poids, ou
g) l'adjuvant hydrophile étant au moins un alcool monovalent ou polyvalent et/ou un alcool de sucre, une proportion minimale Cₘᵢₙ de l'alcool et/ou de l'alcool de sucre dans le fourrage étant de 0,01 % en poids à 1,5 % en poids et une proportion maximale Cₘₐₓ de l'alcool et/ou de l'alcool de sucre dans le fourrage étant de 0,6 % en poids à 3,0 % en poids.

2. Fourrage (100) selon la revendication 1,
**caractérisé en ce que**
la proportion en masse C augmente de manière monotone de la zone intérieure (104) à la zone extérieure (102) en passant par la zone de transition.

3. Fourrage (100) selon la revendication 1 ou 2,
**caractérisé en ce que**
la surface extérieure (101) forme au moins une partie d'une surface latérale du fourrage (100), de préférence au moins une surface latérale entière du fourrage (100), de manière particulièrement préférée une surface entière du fourrage (100).

4. Fourrage (100) selon l'une des revendications 1 à 3, **caractérisé en ce que**
a) l'adjuvant hydrophile comprend une solution ou une suspension aqueuse, de préférence de l'eau,
b) la proportion minimale Cₘᵢₙ est de 0,01 % en poids à 1,0 % en poids et la proportion maximale Cₘₐₓ est de 0,6 % en poids à 2,0 % en poids,
c) de préférence, la proportion minimale de Cₘᵢₙ étant de 0,01 % en poids à 0,5 % en poids et la proportion maximale Cₘₐₓ étant de 0,6 % en poids à 1,5 % en poids.

5. Fourrage (100) selon l'une des revendications 1 à 3,
**caractérisé en ce que**
a) l'adjuvant hydrophile est au moins un alcool monovalent ou polyvalent et/ou un alcool de sucre,
b) la proportion minimale Cₘᵢₙ étant de 0,01 % en poids à 1,0 % en poids et la proportion maximale Cₘₐₓ étant de 0,6 % en poids à 2,0 % en poids,
c) la proportion minimale Cₘᵢₙ étant de préférence de 0,01 % en poids à 0,5 % en poids et la proportion maximale Cₘₐₓ de 0,6 % en poids à 1,0 % en poids.

6. Fourrage (100) selon l'une des revendications 1 à 5,
**caractérisé en ce que**
la crème grasse contient une proportion massique de graisse de 20 % en poids à 80 % en poids, de préférence de 30 % en poids à 60 % en poids, de manière particulièrement préférée de 40 % en poids à 50 % en poids.

7. Produit alimentaire (200) comprenant
a) un corps de base (210) solide et
b) au moins un fourrage (100)
c) le fourrage (100) étant disposée sur le corps de base (210), de préférence dans un renfoncement (211) du corps de base (210),
**caractérisé en ce que**
f) le fourrage (100) est conçu selon l'une des revendications 1 à 6, et
g) ladite au moins une surface extérieure (101) du fourrage (100) est orientée à l'opposé du corps de base (210).

8. Produit alimentaire (200) selon la revendication 7,
**caractérisé par**
a) au moins un élément de couverture (220) solide,
b) l'élément de couverture (220) recouvrant au moins partiellement une face du fourrage (100) opposée au corps de base (210), et
c) ladite au moins une surface extérieure (101) du fourrage (100) étant adjacente à l'élément de couverture (220).

9. Produit alimentaire (200) selon la revendication 8,
**caractérisé en ce que**
a) l'élément de couverture (220) est espacé d'un bord du renfoncement (211) par une distance de bord, la distance de bord représentant de préférence 1 % à 20 %, de manière particulièrement préférée 2 % à 10 %, de manière plus préférée 3 % à 6 %, d'un diamètre du renfoncement (211), et/ou
b) l'élément de couverture (220) et de préférence également le fourrage (100) forment une saillie par rapport au corps de base (210).

10. Produit alimentaire (200) selon l'une des revendications 7 à 9,
**caractérisé en ce que**
ladite au moins une zone intérieure (104) du fourrage (100) est adjacente au corps de base (210).

11. Procédé de préparation d'un fourrage (100) selon l'une des revendications 1 à 6,
**caractérisé par les étapes suivantes :**
a) fourniture de la crème grasse et de l'adjuvant hydrophile pour le fourrage (100) dans des réservoirs séparés l'un de l'autre,
b) application simultanée d'un flux de crème grasse, de préférence turbulent, de la crème grasse et application d'un flux d'adjuvant, de préférence turbulent, de l'adjuvant hydrophile par au moins deux canaux séparés l'un de l'autre sur une surface,
c) le flux de crème grasse étant mélangé au moins partiellement avec le flux d'adjuvant en dehors des canaux.

12. Procédé selon la revendication 11,
**caractérisé en ce que**
a ) les canaux sont conçus comme des canaux d'une buse multicanaux (420),
a) la buse multicanaux (420) comprenant au moins un canal intérieur (421) et un canal extérieur (422) disposé de préférence de manière concentrique autour du canal intérieur (421),
b) la crème grasse étant appliquée par le canal intérieur (421) et l'adjuvant hydrophile par le canal extérieur (422),
c) la crème grasse étant de préférence appliquée en plus par un canal intermédiaire de la buse multicanaux (420) disposé de préférence de manière concentrique entre le canal intérieur (421) et le canal extérieur (422).

13. Procédé de production d'un produit alimentaire (200) selon l'une des revendications 7 à 10,
**caractérisé par les étapes suivantes :**
a) préparation du corps de base (210) de l'aliment (200),
b) préparation du fourrage (100) sur le corps de base (210), de préférence dans un renfoncement (211) du corps de base (210), avec un procédé selon l'une des revendications 11 à 12,
c) ladite au moins une surface extérieure (101) du fourrage (100) étant orientée à l'opposé du corps de base (210).

14. Procédé selon la revendication 13
**caractérisé par les étapes suivantes :**
a) préparation d'un élément de couverture (220) solide du produit alimentaire (200),
b) application de l'élément de couverture (220) sur le fourrage (100),
c) l'élément de couverture (220) recouvrant au moins partiellement une face du fourrage (100) orientée à l'opposé du corps de base (210), et
d) ladite au moins une surface extérieure (101) du fourrage (100) étant adjacente à au moins une surface extérieure de l'élément de couverture (220).

15. Procédé selon la revendication 14
**caractérisé par l'étape :**
chauffage/réchauffement d'une surface de contact du fourrage (100) pour le contact avec l'élément de couverture (220) et/ou d'une surface de contact de l'élément de couverture (220) pour le contact avec le fourrage (100) avant l'application et/ou pendant l'application de l'élément de couverture (220) sur le fourrage (100).
